# EUROPEAN PATENT APPLICATION

(11) **EP 4 838 613 A1**
(43) Date of publication of application: **11.11.2026**
(21) Application number: 26158542.6
(22) Date of filing: 13.02.2026
(51) Int. Cl.: H01M 10/0583, H01M 10/04, H01M 50/466

(54) **SECONDARY BATTERY AND METHOD FOR MANUFACTURING SECONDARY BATTERY**

(30) Priority: 07.05.2025 JP 2025077523
(71) Applicant: Toyota Jidosha Kabushiki Kaisha, Toyota-shi, Aichi-ken 471-8571 (JP)
(72) Inventor: HIRUKAWA, Tomofumi, Toyota-Shi, Aichi-Ken 471-8571 (JP); IKEYAMA, Suguru, Toyota-Shi, Aichi-Ken 471-8571 (JP); KATO, Kazuhito, Toyota-Shi, Aichi-Ken 471-8571 (JP); SAKASHITA, Yasuhiro, Toyota-Shi, Aichi-Ken 471-8571 (JP); SHIMURA, Yosuke, Toyota-Shi, Aichi-Ken 471-8571 (JP); NAKANO, Takahiko, Toyota-Shi, Aichi-Ken 471-8571 (JP)
(74) Representative: Cabinet Beau de Loménie

(57) **Abstract**

A secondary battery (10) includes an electrode stack (16) in which a plurality of electrodes (12, 20, 30), each including an electrode active material layer (6, 24, 34) coated on at least one surface of a current collector (4, 22, 32) in the form of a sheet, is stacked in a first direction via an accordion-folded separator (14). The electrode active material layer (6, 24, 34) includes protrusions (18, 24b, 34b) at a plurality of positions spaced away from an edge of a first surface (24a, 34a) facing the separator (14) in the first direction. Each of the protrusions is provided by a portion of the first surface that protrudes toward the separator.

## Description

### 1. Field of the Invention

The technology disclosed in the present specification relates to secondary batteries and methods for manufacturing a secondary battery.

### 2. Description of Related Art

U.S. Patent Application Publication No. 2024/0063424 discloses an electrode assembly for a secondary battery, including a plurality of cathode plates, a plurality of anode plates, and separators disposed between the cathode and anode plates. According to U.S. Patent Application Publication No. 2024/0063424, the separator is folded in a zigzag (accordion-folded) manner, and the cathode and anode plates are alternately stacked in the folded sections of the separator.

Japanese Unexamined Patent Application Publication No. 2021-111538 (JP 2021-111538 A) discloses an electrode stack in which cathode plates, each having a cathode current collector, and anode plates, each having an anode current collector, are alternately stacked via an accordion-folded strip-shaped separator. According to JP 2021-111538 A, during a process of obtaining each of the cathode and anode plates from a base material, burrs protruding toward one side in a thickness direction are formed at the peripheral edges of the cathode and anode current collectors. Edges of the cathode active material coated on the cathode current collector and edges of the anode active material coated on the anode current collector protrude as the burrs are formed.

According to Japanese Unexamined Patent Application Publication No. 2001-15103 (JP 2001-15103 A), at the start of coating, a raised portion is formed at an edge of an anode active material layer coated on a current collector of an anode plate.

### SUMMARY OF THE INVENTION

In electrode assemblies and electrode stacks such as those described above, relative misalignment occurs between the separator and the electrodes in a direction intersecting the stacking direction of the electrodes and the separator. The present disclosure provides technology useful for suppressing such misalignment.

The present specification discloses a secondary battery. The secondary battery includes an electrode stack in which a plurality of electrodes, each including an electrode active material layer coated on at least one surface of a current collector in the form of a sheet, is stacked in a first direction via a separator that is accordion-folded. The electrode active material layer includes protrusions at a plurality of positions spaced away from an edge of a first surface facing the separator in the first direction. Each of the protrusions is provided by a portion of the first surface that protrudes toward the separator.

With the above configuration, the protrusions provided at the positions away from the edge of the first surface of the electrode active material layer bite into the separator. This configuration suppresses misalignment between the separator and the electrodes.

The present specification discloses a method for manufacturing a secondary battery. The method includes: a rolling step of rolling the electrode active material layer by pressing a cylindrical roller, having at least one recess on a surface of the cylindrical roller, against the electrode active material layer coated on a current collector of an electrode; and a stacking step of stacking a plurality of the electrodes, each including a plurality of protrusions formed in the electrode active material layer by pressing the at least one recess against the electrode active material layer during the rolling step, via the separator that is accordion-folded, and thus forming the electrode stack in which each of the electrodes is sandwiched by the separator with the protrusions protruding toward the separator. With the above method, it is possible to easily manufacture a secondary battery in which misalignment between the separator and the electrodes is suppressed.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 schematically shows an electrode sheet to be roll-pressed, as viewed from a direction facing one surface of the electrode sheet;
FIG. 2 is a cross-sectional view of a secondary battery;
FIG. 3 is an exploded perspective view of an electrode stack;
FIG. 4 is an enlarged cross-sectional view of a portion of the secondary battery;
FIG. 5 shows an anode as viewed in a direction facing a first surface of an anode active material layer;
FIG. 6 shows an anode and a cathode as viewed in the same direction as in FIG. 5; and
FIG. 7 is an enlarged cross-sectional view of a portion of the secondary battery, showing an example in which a protrusion is formed on a second surface.

### DETAILED DESCRIPTION OF EMBODIMENTS

Main features of an embodiment described below will first be described. These features may be combined as desired.

**In** the secondary battery disclosed in the present specification, the height of the protrusions measured from the first surface may be 10% or less of the thickness of the electrode active material layer excluding the protrusions.
In the above configuration, the height of the protrusions is set to 10% or less of the thickness of the electrode active material layer excluding the protrusions. This can suppress variations in the density of the active material in the electrode active material layer including the protrusions.

In the secondary battery disclosed in the present specification, the height of the protrusions measured from the first surface may be 20% or more of the thickness of the separator.
In the above configuration, the height of the protrusions is 20% or more of the thickness of the separator. This can ensure an appropriate amount of biting of the protrusions into the separator.

In the secondary battery disclosed in the present specification, each of the protrusions may have a shape that tapers toward a tip of the protrusion.
With this configuration, the protrusions more easily bite into the separator, thereby further suppressing misalignment between the separator and the electrodes.

According to the secondary battery disclosed in the present specification, the electrode stack may be a stack in which a cathode and an anode are alternately stacked in the first direction with the separator interposed between the cathode and the anode, the cathode and the anode being the electrodes. In a plane orthogonal to the first direction, the anode may be larger in size than the cathode. The electrode active material layer coated on the current collector of the anode may include the protrusions in a region that does not overlap the cathode.
In this configuration, the electrode active material layer of the anode includes the protrusions in the region that does not overlap the cathode. This reduces the likelihood that the protrusions affect the flow of ions between the electrodes.

In the secondary battery disclosed in the present specification, the electrode active material layer may include two of the protrusions arranged at diagonally opposite positions within the first surface.
With the above configuration, the misalignment can be reliably suppressed with a minimum number of protrusions.

According to the secondary battery disclosed in the present specification, the electrode active material layer may further include a protrusion provided by a portion of a second surface facing the separator in a second direction intersecting the first direction, the portion protruding toward the separator.
In the above configuration, the electrode active material layer includes the protrusion protruding from the second surface toward the separator, in addition to the protrusions protruding from the first surface toward the separator. This configuration even more effectively suppresses misalignment between the separator and the electrodes.

An embodiment will now be described with reference to the drawings. The drawings are merely illustrative, and the embodiment is not limited to what is shown in the drawings. Since the drawings are illustrative, certain portions may be omitted for clarity.

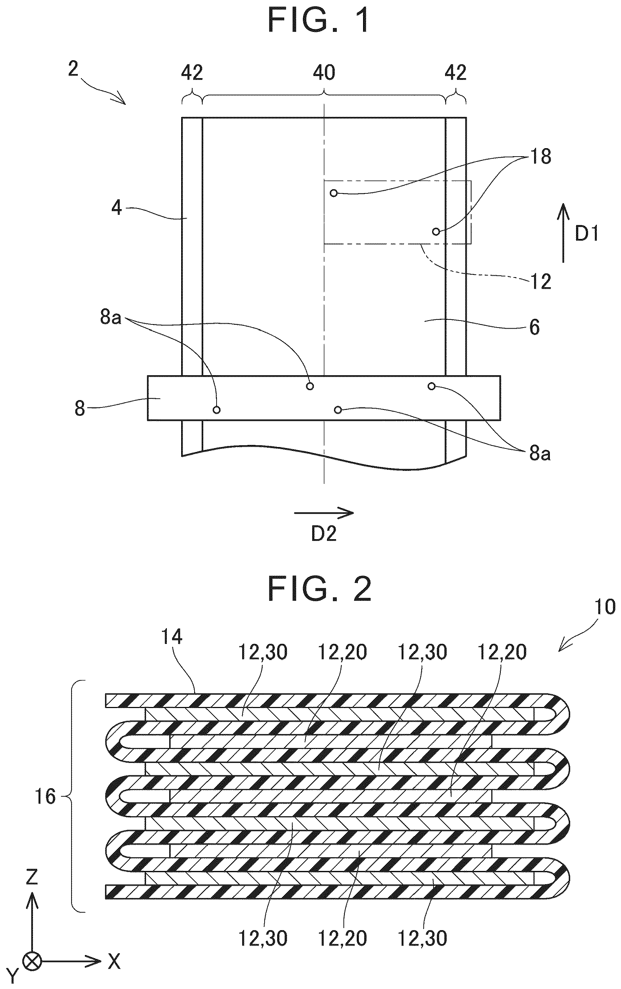

FIG. 1 schematically shows an electrode sheet 2 to be roll-pressed, as viewed from a direction facing one surface of the electrode sheet 2. The electrode sheet 2 includes a current collector 4 in the form of an elongated sheet and an electrode active material layer 6 coated on at least one surface of the current collector 4. The current collector 4 is a metal foil. A region of the current collector 4 on which the electrode active material layer 6 is coated is referred to as "coated portion 40." A region of the current collector 4 on which the electrode active material layer 6 is not coated is referred to as "uncoated portion 42." In FIG. 1, sign D1 indicates a longitudinal direction of the electrode sheet 2, and sign D2 indicates a width direction of the electrode sheet 2 that is orthogonal to the longitudinal direction D1. As shown in FIG. 1, the electrode sheet 2 has uncoated portions 42 at both ends in the width direction D2.

As shown in FIG. 1, a roller 8 elongated in the width direction D2 comes into contact with the electrode sheet 2 as the electrode sheet 2 is conveyed along the longitudinal direction D1. The roller 8 is a cylindrical member. To increase the density of the electrode active material layer 6 and to make its thickness uniform, the electrode sheet 2 is roll-pressed under a predetermined pressure using the roller 8. In roll pressing, the roller 8 rotates while being pressed against the electrode active material layer 6, thereby rolling the electrode active material layer 6. This roll pressing corresponds to the rolling step.

At least one recess 8a is formed on the surface of the roller 8. Accordingly, when the roller 8 is pressed against the electrode active material layer 6, protrusions 18 conforming to the shape of the recess 8a are formed in the electrode active material layer 6. The recess 8a may also be referred to as a depression, and the protrusion 18 may also be referred to as a projection. Since the roller 8 having the recess 8a rotates while being pressed against the electrode active material layer 6, protrusions 18 are repeatedly formed in the electrode active material layer 6 of the electrode sheet 2 conveyed along the longitudinal direction D1. Only some of the protrusions 18 formed in the electrode active material layer 6 are shown in FIG. 1.

In FIG. 1, the size of one electrode 12 is shown by the region enclosed by a long dashed double-short dashed line. After the roll pressing, the electrode sheet 2 is cut and separated into a plurality of electrodes 12 each having, for example, the size shown in FIG. 1. Accordingly, the electrode sheet 2 includes a plurality of electrodes 12, and each electrode 12 may be regarded as having undergone roll pressing (the rolling step). In the present embodiment, the size of each electrode 12 is not particularly limited. However, as a result of roll pressing using the roller 8, a plurality of protrusions 18 is formed within the plane of the electrode active material layer 6 of each electrode 12.

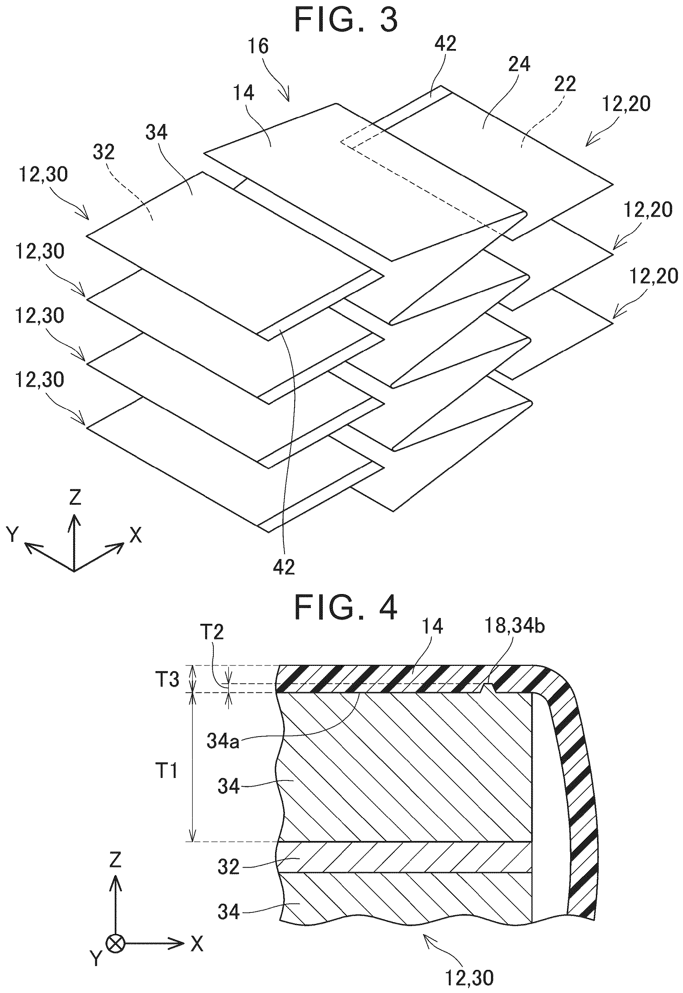

As shown in FIGS. 2 and 3, the electrodes 12 are used as part of the configuration of a secondary battery 10. FIG. 2 schematically shows a cross section of the secondary battery 10. The secondary battery 10 may be, for example, a rechargeable lithium-ion battery. The secondary battery 10 includes an electrode stack 16 formed by stacking the electrodes 12 in a first direction with a separator 14 interposed therebetween. FIG. 3 is a schematic exploded perspective view of the electrode stack 16. The electrodes 12 include a cathode 20 and an anode 30.

The secondary battery 10 includes a flexible outer package (not shown), and the electrode stack 16 is sealed inside the outer package. An electrolyte solution (not shown) is also enclosed inside the outer package. The outer package may be, for example, a laminate sheet. For convenience of description, X-, Y-, and Z-axes that are orthogonal to each other are shown in FIGS. 2 to 7. The Z-axis direction (+Z- and -Z-directions) corresponds to the first direction. The first direction may also be referred to as "stacking direction." FIG. 2 is a cross-sectional view taken along a plane orthogonal to the Y-axis.

As shown in FIGS. 2 and 3, the electrode stack 16 is formed by, for example, alternately stacking substantially rectangular cathodes 20 and substantially rectangular anodes 30 in the first direction such that a strip-shaped separator 14 accordion-folded with alternating mountain and valley folds is interposed therebetween. In this configuration, each of the cathodes 20 is sandwiched between two surfaces on one side of the accordion-folded separator 14, while each of the anodes 30 is sandwiched between two surfaces on the other side of the accordion-folded separator 14. Each of the cathodes 20 and the anodes 30 extends in the X-axis and Y-axis directions. For the electrodes 12, the Y-axis direction may be understood as corresponding to the width direction D2 shown in FIG. 1. The separator 14 is formed of a material that provides both permeability that allows movement of charge carriers (in this case, lithium ions) during charging and discharging, and insulation that suppresses short-circuiting caused by contact between the cathode 20 and the anode 30. Examples of materials for the separator 14 include polypropylene and polyethylene.

As shown in FIG. 3, the cathode 20 includes a cathode current collector 22 and a cathode active material layer 24 coated on the cathode current collector 22. The cathode current collector 22 is an example of the current collector 4, and the cathode active material layer 24 is an example of the electrode active material layer 6. The cathode active material layer 24 is coated, for example, on both surfaces of the cathode current collector 22. The cathode current collector 22 is, for example, an aluminum foil. The cathode active material layer 24 contains a cathode active material. Examples of cathode active materials include lithium nickel composite oxides, lithium cobalt composite oxides, and lithium manganese composite oxides.

The anode 30 includes an anode current collector 32 and an anode active material layer 34 coated on the anode current collector 32. The anode current collector 32 is an example of the current collector 4, and the anode active material layer 34 is an example of the electrode active material layer 6. The anode active material layer 34 is coated, for example, on both surfaces of the anode current collector 32. The anode current collector 32 is, for example, a copper foil. The anode active material layer 34 contains an anode active material. Examples of anode active materials include carbon materials such as graphite, hard carbon, and soft carbon; materials such as silicon (Si) that form alloys with lithium; and lithium alloys. The electrode active material may be formed of a single material or may be formed of multiple materials. The electrode active material layer may also contain a conductive additive, a binder, etc.

Each of the electrodes 12 (the cathodes 20 and the anodes 30) has an uncoated portion 42 that protrudes in a direction intersecting the first direction. For example, the Y-axis direction (+Y-direction and -Y-direction) is an example of the direction intersecting the first direction. As shown in FIG. 3, the uncoated portions 42 of the cathodes 20 protrude in the +Y-direction, and the uncoated portions 42 of the anodes 30 protrude in the -Y-direction. Although not shown in the figures, the uncoated portions 42 of the cathodes 20 are electrically connected to a cathode terminal via current collecting tabs outside a region sandwiched by the separator 14. Similarly, although not shown in the figures, the uncoated portions 42 of the anodes 30 are electrically connected to an anode terminal via current collecting tabs outside the region sandwiched by the separator 14.

FIG. 4 is an enlarged cross-sectional view of a portion of the secondary battery 10 shown in FIG 2, as viewed from the same direction as in FIG. 2. In FIG. 4, the anode 30 is shown as the electrode 12. As shown in FIG. 4, the anode active material layer 34 is coated on both surfaces of the anode current collector 32. As shown in FIG. 4, the anode active material layer 34 includes a protrusion 34b. The protrusion 34b is provided by a portion of a first surface 34a facing the separator 14 in the first direction, namely a portion of the first surface 34a that protrudes toward the separator 14. The protrusion 34b is an example of the protrusions 18. Hereinafter, the protrusion 34b is also referred to as "anode protrusion 34b."

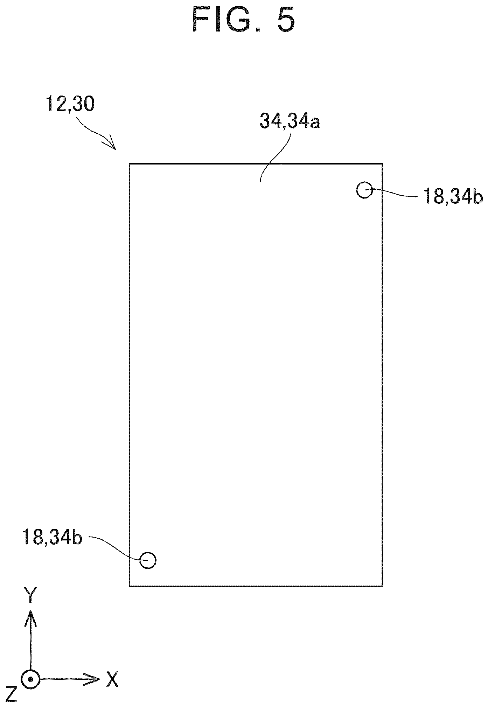

FIG. 5 shows a single anode 30 as viewed from a direction facing the first surface 34a of the anode active material layer 34. In FIG. 5, the uncoated portion 42 of the anode 30 is not shown, and only the coated portion 40 of the anode 30 is shown. As shown in FIG. 5, anode protrusions 34b are formed on the first surface 34a at a plurality of positions spaced away from edges of the first surface 34a. In FIG. 5, the edges of the first surface 34a are two sides of the first surface 34a that are parallel to the X-axis direction and two sides of the first surface 34a that are parallel to the Y-axis direction. As shown in FIG. 5, two anode protrusions 34b are provided on the first surface 34a, and these two anode protrusions 34b are arranged, by way of example, at diagonally opposite positions within the first surface 34a extending in the X-axis and Y-axis directions and having a substantially rectangular shape. The number of anode protrusions 34b on the first surface 34a may be greater than two.

In a configuration in which the anode active material layer 34 is coated on both surfaces of the anode current collector 32, each of the anode active material layers 34 coated on the respective surfaces of the anode current collector 32 has a first surface 34a that faces (and contacts) the separator 14. The roll pressing described with reference to FIG. 1 may be performed using a pair of rollers 8 that contacts both surfaces of the electrode sheet 2 so as to sandwich the electrode sheet 2 therebetween. The recess 8a may be formed on the surface of each of the two rollers 8 forming the pair, or the recess 8a may be formed on the surface of one of the rollers 8. Accordingly, for example, a plurality of anode protrusions 34b protruding toward the separator 14 may be formed on the respective first surfaces 34a of the anode active material layers 34 coated on both surfaces of the anode current collector 32. Alternatively, a plurality of anode protrusions 34b protruding toward the separator 14 may be formed on one of the respective first surfaces 34a of the anode active material layers 34 coated on both surfaces of the anode current collector 32.

A first surface of the cathode active material layer 24 of the cathode 20, namely the first surface that faces the separator 14 in the first direction, may also have protrusions 18 (cathode protrusions) at a plurality of positions spaced away from edges of the first surface, and each of the protrusions 18 may be provided by a portion of the first surface that protrudes toward the separator 14. The description given above regarding the anode protrusions 34b of the anode active material layer 34 of the anode 30 is also applicable to the cathode protrusions of the cathode active material layer 24 of the cathode 20.

The step of forming the electrode stack 16 by stacking the electrodes 12 with the accordion-folded separator 14 interposed therebetween as shown in FIGS. 2 and 3 corresponds to the stacking step. In the stacking step, the electrodes 12 in which a plurality of protrusions 18 has been formed in the electrode active material layer 6 by pressing the recess 8a of the roller 8 against the electrode active material layer 6 during the rolling step are stacked with the separator 14 interposed therebetween. Through the stacking step, the electrode stack 16 is formed such that each of the electrodes 12 is sandwiched by the separator 14 with the protrusions 18 protruding toward the separator 14. The present embodiment discloses a method for manufacturing the secondary battery 10 that includes the rolling step and the stacking step.

According to the present embodiment, when the electrodes 12 and the separator 14 are stacked in the first direction to form the electrode stack 16, the protrusions 18 formed at a plurality of positions spaced away from the edges of the first surface of the electrode active material layer 6 bite into the separator 14. As a result, rotation of the electrodes 12 relative to the separator 14 is restricted, and misalignment between the separator 14 and the electrodes 12 is suppressed. Accordingly, the quality of the secondary battery 10 is improved. In the present embodiment, the electrodes 12 do not have protrusions (burrs) that protrude from edges of the current collector toward the separator as disclosed in JP 2021-111538 A. Furthermore, the electrodes 12 do not have protrusions that protrude from edges of the electrode active material layer toward the separator as disclosed in JP 2021-111538 A and JP 2001-15103 A.

As shown in FIG. 4, the anode protrusion 34b has a shape that tapers toward its tip. With this configuration, the anode protrusion 34b more easily bites into the separator 14, thereby further suppressing misalignment between the separator 14 and the electrodes 12.

FIG. 4 shows the thickness T1 of the anode active material layer 34, the height T2 of the anode protrusion 34b measured from the first surface 34a, and the thickness T3 of the separator 14. The thickness T1 corresponds to the thickness of the electrode active material layer 6 excluding the protrusions 18. For example, the thickness T1 is about 60 µm, and the thickness T3 is about 12 µm. The height T2 is, for example, 10% or less of the thickness T1. The height T2 is, for example, 20% or more of the thickness T3. By setting the height T2 to 10% or less of the thickness T1, variations in the density of the active material in the electrode active material layer 6 including the protrusions 18 can be suppressed. By setting the height T2 to 20% or more of the thickness T3, an appropriate amount of biting of the protrusions 18 into the separator 14 can be ensured. When it is assumed that the cathode active material layer 24 and the anode active material layer 34 contact both surfaces of the separator 14 and that protrusions 18 protrude from each of the cathode active material layer 24 and the anode active material layer 34 toward the separator 14, the height T2 is preferably less than 50% of the thickness T3.

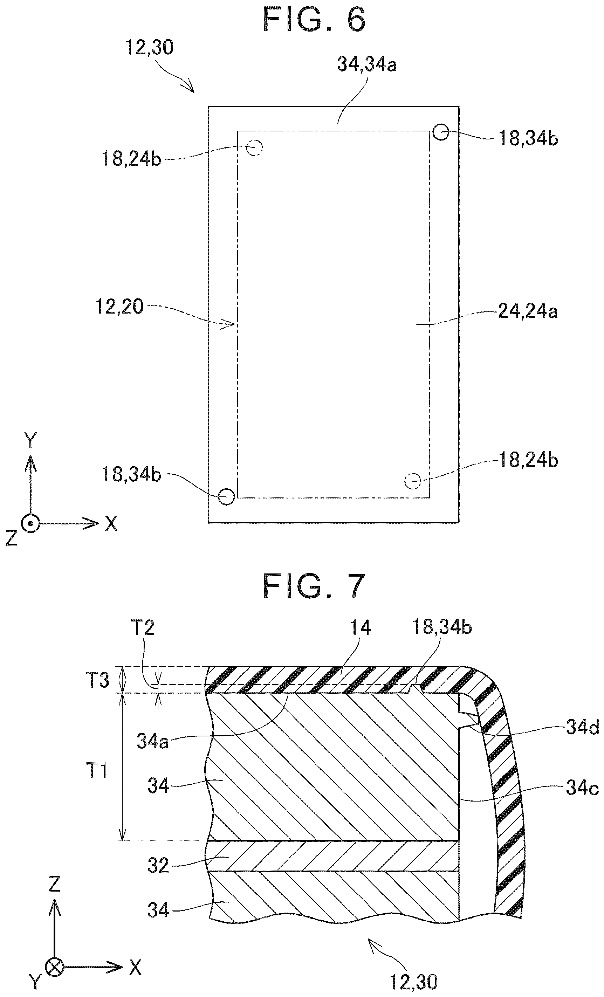

FIG. 6 shows the anode 30 in continuous lines as viewed from the same direction as in FIG. 5. FIG. 6 also shows, in long dashed double-short dashed lines, the cathode 20 stacked with the anode 30 with the separator 14 interposed therebetween. As in FIG. 5, only the coated portion 40 of the anode 30 is shown in FIG. 6. In FIG. 6, the uncoated portion 42 of the cathode 20 is not shown, and only the coated portion 40 of the cathode 20 is shown. In a plane (the X-Y plane) orthogonal to the first direction (the Z-axis direction), the anode 30 is larger in size than the cathode 20. That is, when viewed from the direction in FIG. 6, the coated portion 40 of the cathode 20 lies entirely within the coated portion 40 of the anode 30. In such a configuration, as shown in FIG. 6, the anode active material layer 34 of the anode 30 may have the anode protrusions 34b in regions that do not overlap the cathode 20. This reduces the likelihood that the anode protrusions 34b affect the flow of ions between the cathode 20 and the anode 30.

As described above, protrusions 18 (cathode protrusions) may be formed in the cathode active material layer 24 of the cathode 20. FIG. 6 shows a plurality of cathode protrusions 24b formed on the first surface 24a of the cathode active material layer 24 that faces the separator 14. The positions of the cathode protrusions 24b are also preferably close to edges of the cathode active material layer 24 (but not at the edges) so as to minimize any influence on the flow of ions between the cathode 20 and the anode 30.

When viewed from the direction in FIG. 6, the anode protrusions 34b and the cathode protrusions 24b are formed at positions offset from each other. Each of the anode protrusions 34b and the cathode protrusions 24b bites into the separator 14. By forming the anode protrusions 34b and the cathode protrusions 24b at positions offset from each other, insufficient biting of the anode protrusions 34b and the cathode protrusions 24b into the separator 14 can be reduced.

The electrode active material layer 6 may further include a protrusion that is provided by a portion of a second surface facing the separator 14 in a second direction intersecting the first direction, namely a portion of the second surface that protrudes toward the separator 14. The X-axis direction and the Y-axis direction, which are orthogonal to the Z-axis direction corresponding to the first direction, are each one of the directions intersecting the first direction. Here, the X-axis direction (the +X-direction and the -X-direction) is regarded as the second direction intersecting the first direction, and the Y-axis direction (the +Y-direction and the -Y-direction) is regarded as a third direction intersecting both the first direction and the second direction.

As shown in FIGS. 2 and 3, each of the cathodes 20 and the anodes 30 is sandwiched by the separator 14 in the Z-axis direction, but is not sandwiched by the separator 14 in the Y-axis direction. The cathode 20 does not face the separator 14 in the +X-direction and faces a folded portion of the separator 14 in the -X-direction. In contrast, the anode 30 faces a folded portion of the separator 14 in the +X-direction and does not face the separator 14 in the -X-direction. Accordingly, for the cathode 20, a side surface facing the -X-direction corresponds to the second surface. For the anode 30, a side surface facing the +X-direction corresponds to the second surface.

FIG. 7 is an enlarged cross-sectional view of a portion of the secondary battery 10, similar to FIG. 4. In FIG. 7, the anode 30 is shown as the electrode 12 in the same manner as in FIG. 4. In FIG. 7, a side surface of the anode active material layer 34 that faces the separator 14 in the +X-direction is a second surface 34c. The second surface 34c may be regarded as a surface corresponding to the thickness T1 of the anode active material layer 34. As shown in FIG. 7, the second surface 34c has a protrusion 34d that protrudes toward the separator 14. A plurality of the protrusions 34d may be provided. When the protrusion 34d bites into or interferes with the opposing separator 14, misalignment between the separator 14 and the electrode 12 can be suppressed even more effectively. Similarly, a protrusion protruding toward the separator 14 may also be formed on a side surface (the second surface) of the cathode active material layer 24 of the cathode 20 that faces the separator 14 in the -X-direction.

Although specific examples of the technology disclosed in the present specification have been described in detail above, these examples are merely illustrative and do not limit the scope of the claims. The technology described in the claims includes various modifications and variations of the specific examples illustrated above. The technical elements described in the present specification and the drawings exhibit technical utility either individually or in various combinations, and are not limited to the combinations described in the claims as originally filed. The technology illustrated in the present specification and the drawings achieve multiple objectives simultaneously, and achieving even one of these objectives alone provides technical utility.

## Claims

1. A secondary battery (10) comprising an electrode stack (16) in which a plurality of electrodes (12, 20, 30), each including an electrode active material layer (6, 24, 34) coated on at least one surface of a current collector (4, 22, 32) in a form of a sheet, is stacked in a first direction via a separator (14) that is accordion-folded,
wherein the electrode active material layer (6) includes protrusions (18, 24b, 34b) at a plurality of positions spaced away from an edge of a first surface (24a, 34a) facing the separator (14) in the first direction, each of the protrusions (18, 24b, 34b) being provided by a portion of the first surface (24a, 34a) that protrudes toward the separator (14).

2. The secondary battery (10) according to claim 1, wherein a height of the protrusions (18, 24b, 34b) measured from the first surface is 10% or less of a thickness of the electrode active material layer (6,24, 34) excluding the protrusions (18, 24b, 34b).

3. The secondary battery (10) according to claim 1, wherein a height of the protrusions (18, 24b, 34b) measured from the first surface (24a, 34a) is 20% or more of a thickness of the separator.

4. The secondary battery (10) according to claim 1, wherein each of the protrusions (18, 24b, 34b) has a shape that tapers toward a tip of the protrusion (18, 24b, 34b).

5. The secondary battery (10) according to claim 1, wherein:
the electrode stack (16) is a stack in which a cathode (20) and an anode (30) are alternately stacked in the first direction with the separator (14) interposed between the cathode (20) and the anode (30), the cathode (20) and the anode (30) being the electrodes (12);
in a plane orthogonal to the first direction, the anode (30) is larger in size than the cathode (20); and
the electrode active material layer (6, 24, 34) coated on the current collector (4, 22, 32) of the anode (30) includes the protrusions (34b) in a region that does not overlap the cathode (20).

6. The secondary battery (10) according to claim 1, wherein the electrode active material layer (6, 24, 34) includes two of the protrusions (18, 24b, 34b) arranged at diagonally opposite positions within the first surface (24a, 34a).

7. The secondary battery (10) according to claim 1, wherein the electrode active material layer (6, 24, 34) further includes a protrusion (18, 24b, 34b) provided by a portion of a second surface (34c) facing the separator (14) in a second direction intersecting the first direction, the portion protruding toward the separator (14).

8. A method for manufacturing the secondary battery (10) according to claim 1, the method comprising:
a rolling step of rolling the electrode active material layer (6, 24, 34) by pressing a cylindrical roller, having at least one recess on a surface of the cylindrical roller, against the electrode active material layer (6, 24, 34) coated on a current collector (4, 22, 32) of an electrode (12, 20, 30); and
a stacking step of stacking a plurality of the electrodes (12, 20, 30), each including a plurality of protrusions (18, 24b, 34b) formed in the electrode active material layer (6, 24, 34) by pressing the at least one recess against the electrode active material layer (6, 24, 34) during the rolling step, via the separator (14) that is accordion-folded, and thus forming the electrode stack (16) in which each of the electrodes (12, 20, 30) is sandwiched by the separator (14) with the protrusions (18, 24b, 34b) protruding toward the separator (14).
